# EUROPEAN PATENT APPLICATION

(11) **EP 4 300 183 A1**
(43) Date of publication of application: **03.01.2024**
(21) Application number: 22182091.3
(22) Date of filing: 30.06.2022
(51) Int. Cl.: G02F 1/35, G02B 6/02, G02F 1/365

(54) **APPARATUS FOR BROADBAND RADIATION GENERATION**

(71) Applicant: ASML Netherlands B.V., 5500 AH Veldhoven (NL)
(72) Inventor: BAUERSCHMIDT, Sebastian, Thomas, 5500 AH Veldhoven (NL); DOMALAPALLY, Phani, Kumar, 5500 AH Veldhoven (NL); UEBEL, Patrick, Sebastian, 5500 AH Veldhoven (NL); GÖTZ, Peter, Maximilian, 5500 AH Veldhoven (NL)
(74) Representative: ASML Netherlands B.V.

(57) **Abstract**

According to one embodiment of the present disclosure there is provided an apparatus for broadband radiation generation, the apparatus comprising a hollow-core fiber at least partially disposed in an enclosure, the enclosure comprising: a body; and a heat transport region configured to transport heat from the hollow-core fiber to the body of the enclosure, the heat transport region comprising a first medium disposed between the hollow-core fiber and the body of the enclosure; wherein, in at least one radial direction from the hollow-core fiber, the heat transport region further comprises a second medium disposed between the first medium and the body of the enclosure over a portion of a length of the enclosure, the second medium comprising a solid and/or a liquid; and wherein a radial distance between the hollow-core fiber and the second medium is less than or equal to 1 mm over the portion.

## Description

### FIELD

The present invention relates to an apparatus for broadband radiation generation, the apparatus comprising a hollow-core fiber at least partially disposed in an enclosure.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurements system may use a broadband radiation source. Such a broadband radiation source may be a supercontinuum source and may comprise an optical fiber having a non-linear medium through which a pulsed pump radiation beam is propagated to broaden a spectrum of the radiation.

One challenge associated with implementing such a supercontinuum source is prolonging the lifetime of the optical fiber by mitigating existing failure mechanisms. Damage (such as glass deposition) at the input and output ends of the fiber has been observed with use. Furthermore, in the case of hollow-core photonic crystal fibers comprising anti-resonant elements, or capillaries, surrounding the core to confine radiation propagating through the core, these elements have been found to exhibit permanent mechanical deformation. Both of these effects have a detrimental effect on performance, as they can result in a reduced output power of the supercontinuum source, and eventually a change in the output spectrum.

It may be desirable to provide alternative apparatus (for example optical fibers) and methods for use in an apparatus for receiving input radiation and broadening a frequency range of the input radiation so as to provide (broadband) output radiation that at least partially addresses one or more problems associated with the prior art whether identified herein or otherwise.

### SUMMARY

According to a first aspect of the present invention there is provided an apparatus for broadband radiation generation, the apparatus comprising a hollow-core fiber at least partially disposed in an enclosure, the enclosure comprising: a body; and a heat transport region configured to transport heat from the hollow-core fiber to the body of the enclosure, the heat transport region comprising a first medium disposed between the hollow-core fiber and the body of the enclosure; wherein, in at least one radial direction from the hollow-core fiber, the heat transport region further comprises a second medium disposed between the first medium and the body of the enclosure over a portion of the length of the enclosure, the second medium comprising a solid and/or a liquid; and wherein a radial distance between the hollow-core fiber (e.g. a surface of the hollow-core fiber) and the second medium (e.g. a surface of the second medium) is less than or equal to 1 mm over the portion.

The hollow-core fiber (also referred to as a "fiber") may be a hollow-core photonic crystal fiber (HC-PCF). In some examples, a HC-PCF may comprise a hollow core axially extending along the HC-PCF; an inner cladding region comprising a plurality of capillaries surrounding the hollow core, each capillary of said plurality of capillaries comprising a wall portion; and a jacket region surrounding the inner cladding region.

It will be appreciated that, as used herein, the inner cladding region is intended to mean a region of the fiber for guiding radiation propagating through the hollow core of the fiber (i.e. confining said radiation within the hollow core). In particular, the inner cladding region is arranged to confine radiation that propagates through the fiber predominantly inside the hollow core and to guide the radiation along the fiber.

Hollow core-facing wall portions of the plurality of capillaries may act as anti-resonant elements. It will be appreciated that an anti-resonance element is intended to mean an element which is arranged to confine radiation within the hollow core predominantly by anti-resonance. Optical fibers comprising anti-resonant elements or structures are known in the art as anti-resonant fibers, tubular fibers, single-ring fibers, negative curvature fibers or inhibited coupling fibers. Various different designs of such fibers are known in the art. In particular, the term anti-resonance element is not intended to encompass elements that arranged to confine radiation within the hollow core predominantly by creating a photonic bandgap in the cladding region (such as, for example, Kagome photonic crystal fibers).

In general, each capillary wall portion at least partially defines the hollow core and separates the hollow core from a cavity. For example, each capillary may comprise a cavity that is separated from the hollow core by a wall. It will be appreciated that the wall portion may act as an anti-resonant Fabry-Perot resonator for radiation that propagates through the hollow core (and may be incident on the wall at a grazing incidence angle). The thickness of the wall portion may be suitable so as to ensure that reflection back into the hollow core is generally enhanced whereas transmission into the cavity is generally suppressed.

The fiber may be suitable for use in an apparatus for receiving input radiation and broadening a frequency range of the input radiation so as to provide output radiation. Fibers which guide radiation using anti-resonance elements can have a broader transmission window (i.e. having a larger transmission bandwidth) than photonic bandgap fibers. Advantageously, such fibers may therefore be better suited for use in an apparatus for receiving input radiation and broadening a frequency range of the input radiation so as to provide output radiation (for example a supercontinuum source).

Additionally or alternatively, the fiber may be suitable for beam delivery applications (without broadening the frequency range of the radiation).

The fiber may be suitable for use as a fiber that delivers light from a light source to a sensor.

The enclosure, which may alternatively be termed e.g. a "reservoir", "housing", "container", or "gas cell", may be used to control, regulate, and/or monitor the fiber and/or the materials (e.g. solids, liquids, and/or gases) contained therein. As used herein, the "body" of the enclosure refers generally to an edge region (e.g. the external wall(s)) of the enclosure to which heat may be transported by the heat transport region. Heat which is transported to the body of the enclosure may be subsequently transported away from the enclosure by a cooling circuit, and/or one or more cooling channels.

Without wishing to be bound by theory, failure of broadband radiation (e.g. supercontinuum) generation systems caused by damage to the fiber may be influenced, at least in part, by the temperature of the fiber material, and it may therefore be desirable to improve thermal management of the fiber and/or the non-linear medium.

In known systems, the medium that facilitates heat transfer between the fiber and the body of the enclosure is generally a gas, often the same gas that forms the non-linear medium for broadband radiation generation. In contrast to such systems, the present invention provides a heat transport region comprising a solid and/or liquid medium, which advantageously provides improved thermal conductivity, and therefore better heat transport away from the fiber, in comparison to a gas. In some examples, the thermal conductivity may be improved over one or serveral orders of magnitude.

The heat transport region may be configured to transport heat radially from the hollow-core fiber to the body of the enclosure.

Ideally, the fiber would be fixed in direct contact with the second medium to provide the best possible thermal contact between the fiber and the second medium. However, fixing the fiber to a solid second medium would cause stress inside the fiber due to the different thermal expansion coefficients of the fiber and the solid medium, ultimately degrading fiber performance. Therefore, in the region of the second medium, the fiber is instead generally allowed to move freely due to thermal expansion (e.g. of the enclosure and/or the fiber), and may be only partly in contact with the second medium at any given time, or not in direct contact at all. In general, the fiber should not be attached to the second medium. The inventors have found that direct contact of the fiber with the second medium is not required to achieve sufficient heat transfer between the fiber and the second medium. Preferably, the radial distance between the fiber (e.g. the surface of the fiber) and the second medium (e.g. a surface of the second medium) is less than or equal to 1 mm at any given point, over the portion of the enclosure containing the second medium, to provide sufficient heat transfer between the fiber and the second medium.

Heat transfer over a non-zero distance between the fiber and the second medium is facilitated by the first medium, which may comprise a gas and/or a liquid. For example, the first medium may comprise a gas configured for generating broadband radiation (i.e. the non-linear medium, or working medium, or working gas). In some examples, the first medium may comprise helium gas, which may advantageously improve heat transfer between the fiber and the second medium in comparison to a first medium consisting only of the non-linear medium. In some examples, the first medium may comprise a liquid. Advantageously, a liquid first medium provides improved heat transfer between the fiber and the second medium (in comparison to a gas first medium), while also allowing free movement of the fiber (e.g. in comparison to a solid first medium).

The hollow-core fiber may be free to move within the first medium in at least one direction perpendicular to a longitudinal axis of the hollow-core fiber.

In general, the enclosure has a much larger coefficient of thermal expansion than that of the hollow-core fiber. When the apparatus is in a horizontal orientation, the fiber is generally clamped in place in the enclosure at opposite ends. For this reason, the fiber may be arranged, when the apparatus is in an "off' or "cold" state, with a bend in a direction perpendicular to the longitudinal axis of the fiber, to compensate for thermal expansion of the enclosure that may result in a straightening of the fiber as the apparatus reaches an operating temperature. In such cases, the composition of the heat transport region needs to facilitate such thermal expansion by allowing the fiber to move in this direction.

In some examples, the radial distance between the hollow-core fiber (e.g. the surface of the hollow-core fiber) and the second medium (e.g. a surface of the second medium) varies azimuthally by around +/- 1 mm to facilitate free movement of the fiber.

In some examples, the radial distance between the hollow-core fiber and the second medium is a distance in the at least one radial direction. Alternatively, in a first radial direction, a first distance between the hollow-core fiber and the second medium may be zero, or may be greater than 1 mm, while in a second radial direction a second distance between the hollow-core fiber and the second medium may be less than or equal to zero.

In some examples, the apparatus further comprises a cooling channel, the cooling channel being external to the body, said cooling channel being configured to cool the body, in use. For example, the cooling channel may comprise a channel configured to allow a fluid (e.g. water) to flow over the exterior of the enclosure as part of a cooling circuit.

In some examples, the second medium forms a slit over the at least a portion of the length of the enclosure, the slit extending in a direction perpendicular to a longitudinal axis of the hollow-core fiber, the slit being wider than a diameter of the hollow-core fiber. Advantageously, in a slit, the fiber is free to move in the slit in the direction perpendicular to the longitudinal axis of the fiber (e.g. due to thermal expansion of the enclosure), while the fiber is maintained in sufficiently close contact with the second medium (i.e., the fiber is almost fully surrounded by the second medium) to enable good heat transfer away from the fiber. The slit may be filled with the first medium.

In some examples, the width of the slit is less than or equal to 2 mm, preferably less than or equal to 1 mm.

In some examples, the portion of the length of the enclosure encloses a portion of the hollow-core fiber, said portion of the hollow-core fiber being a portion where broadband radiation generation takes place (i.e. the portion or region of the hollow-core fiber configured for broadband radiation generation). The portion, or region, of the hollow-core fiber at in which the broadband radiation generation takes place is generally where the highest temperatures in the fiber are reached, and so the inclusion of the second medium in this region may provide the most effective thermal management over any other portion of the fiber.

In some examples, the portion of the length of the enclosure is at least 1 cm long.

In some examples, the portion of the length of the enclosure is at least 2 cm long, at least 5 cm long, or at least 10 cm long.

In some examples, the portion of the length of the enclosure is at least as long as 2% of the total length of the fiber.

In some examples, the portion of the length of the enclosure is at least as long as 5%, 10%, or 20%, of the total length of the fiber.

In some examples, the heat transport region comprises the second medium only over the portion of the length of the enclosure enclosing the portion of the hollow-core fiber where broadband radiation generation takes place (i.e. the second medium may not be present in any other part of the enclosure).

In some examples, the hollow-core fiber is configured to hang vertically, in use. For example, the enclosure may be arranged in a vertical orientation such that the fiber hangs under gravity. In such an orientation, the fiber may be held at an uppermost end such that the fiber is generally positioned very close to the second medium (in some cases, with zero spatial separation in at least one radial direction). In some examples, the vertically hanging fiber may at least partly rest against the second medium. However, hanging vertically may advantageously prevent the fiber from becoming trapped against the second medium (in particular where the second medium comprises a solid material), for example advantageously in cases where the second medium surrounds the fiber on all sides (i.e. in all radial directions), or surrounds more than half of the fiber.

In some examples, the hollow-core fiber and enclosure are arranged horizontally, e.g. with the fiber being clamped at opposite ends.

In some examples, the second medium comprises one or more internal cooling channels extending in a direction parallel to a longitudinal axis of the hollow-core fiber. For example, where the second medium comprises a solid, an internal cooling channel may comprise a hollow bore through the second medium configured to allow a cooling fluid (e.g. water) to flow through said bore, for example as part of a cooling circuit. Alternatively, or in addition, where the second medium comprises a liquid, an internal cooling channel may comprise a pipe that passes through the second medium. The pipe may be configured for the flow of a cooling fluid (e.g. water), for example as part of a cooling circuit. In some examples, the apparatus comprises one or more internal cooling channels as well as a cooling channel external to the body, as described herein.

In some examples, the first medium comprises a gas. In some examples, the first medium may comprise a gas configured for the generation of broadband radiation (i.e. a non-linear medium). In some examples, the first medium may comprise a gas mixture. In some examples, the first medium may comprise helium.

In some examples, the first medium comprises a liquid (e.g. water, liquid gallium and/or another liquid metal, carbon disulfide (CS₂), and/or tetrachloroethylene (C₂Cl₄)). Advantageously, a liquid first medium provides improved heat transfer between the fiber and the second medium (in comparison to a gas first medium), while also allowing free movement of the fiber (e.g. due to thermal expansion of the enclosure and/or the fiber). In some examples, both the first and second mediums comprise a liquid, such that the heat transport medium is mostly or entirely liquid in at least one radial direction between the fiber and the body of the enclosure.

In some examples, the second medium comprises any of: a metal (e.g. steel, aluminum, Invar, and/or an alloy thereof), a ceramic, and/or a glass.

In some examples, the radial distance between the hollow-core fiber and the second medium, in the at least one radial direction, is 200 µm; preferably wherein said radial distance is 100 µm.

In some examples, a distance, in the at least one radial direction, between the second medium and at least a portion of a length of the hollow-core fiber is zero.

According to a second aspect of the present invention, there is provided a method of generating broadband radiation, the method comprising: emitting input radiation from an input radiation source; receiving the input radiation by an apparatus according as described herein; and generating, using the apparatus, an output comprising broadband radiation.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometer metrology tool;
- Figure 5 depicts a schematic overview of a level sensor metrology tool;
- Figure 6 depicts a schematic overview of an alignment sensor metrology tool;
- Figure 7 is a schematic cross sectional view of an optical fiber in a transverse (x-y) plane (i.e. perpendicular to an axis of the optical fiber);
- Figure 8 is a schematic cross sectional view of the optical fiber shown in Figure 7 in a plane containing the axis of the optical fiber (i.e. y-z plane);
- Figure 9 depicts an apparatus for broadband radiation generation;
- Figure 10 depicts an apparatus for broadband radiation generation of the type shown in Figure 9, further comprising an enclosure;
- Figure 11 depicts a schematic representation of a radiation source for providing broadband output radiation, the radiation source comprising the apparatus for broadband radiation generation as shown in Figure 10;
- Figure 12 illustrates a cross-section of an apparatus of broadband radiation generation including a heat transport region according to the present invention;
- Figure 13 illustrates a numerical simulation of a fiber disposed within a gas medium, the gas medium being contained by a solid medium, where a distance between the fiber and the solid medium is varied;
- Figure 14 illustrates the results of the numerical simulation illustrated in Figure 13;
- Figure 15 illustrates a cross-section of an apparatus of broadband radiation generation including a heat transport region according to the present invention, the heat transport region comprising a first medium and a second medium;
- Figure 16 illustrates a cross-section of an apparatus of broadband radiation generation including a heat transport region according to the present invention, the heat transport region comprising a first medium and a second medium, wherein the second medium forms a slit extending in a direction perpendicular to a longitudinal axis of the fiber;
- Figure 17 illustrates a cross-section of an apparatus of broadband radiation generation including a cooling channel external to the body of the enclosure;
- Figure 18 illustrates a cross-section of an apparatus of broadband radiation generation including one or more internal cooling channels;
- Figure 19 illustrates a cross-section of an apparatus of broadband radiation generation according to the present invention, wherein the second medium extends in a direction parallel to a longitudinal axis of the fiber over only a portion of the length of the enclosure;
- Figure 20 illustrates a cross-section of an apparatus of broadband radiation generation including a heat transport region according to the present invention, the apparatus being arranged in a vertical orientation; and
- Figure 21 schematically illustrates a method of generating broadband radiation according to the present invention.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

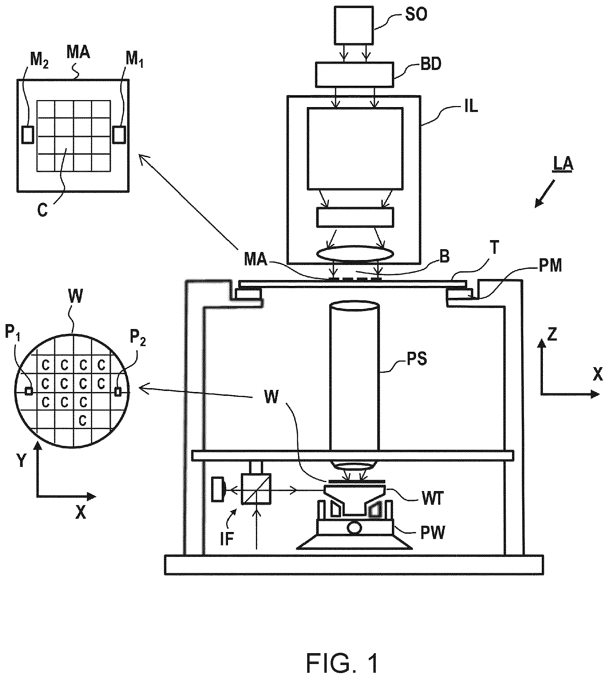

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

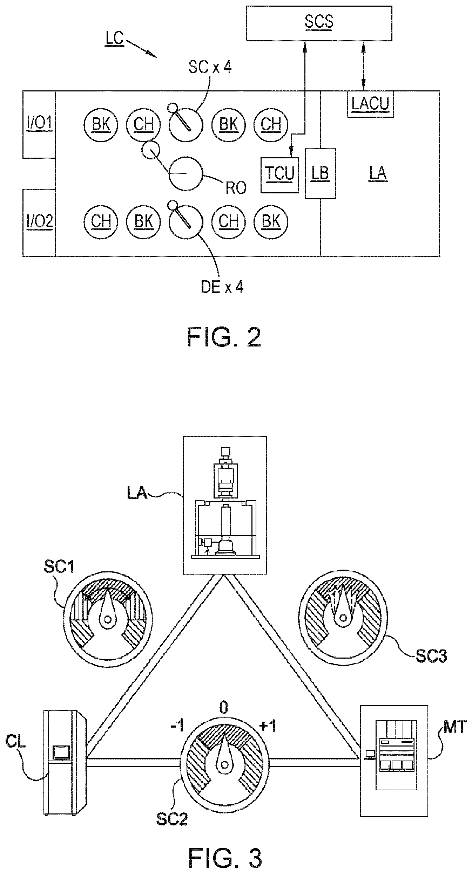

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3). Different types of metrology tools MT for measuring one or more properties relating to a lithographic apparatus and/or a substrate to be patterned will now be described.

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

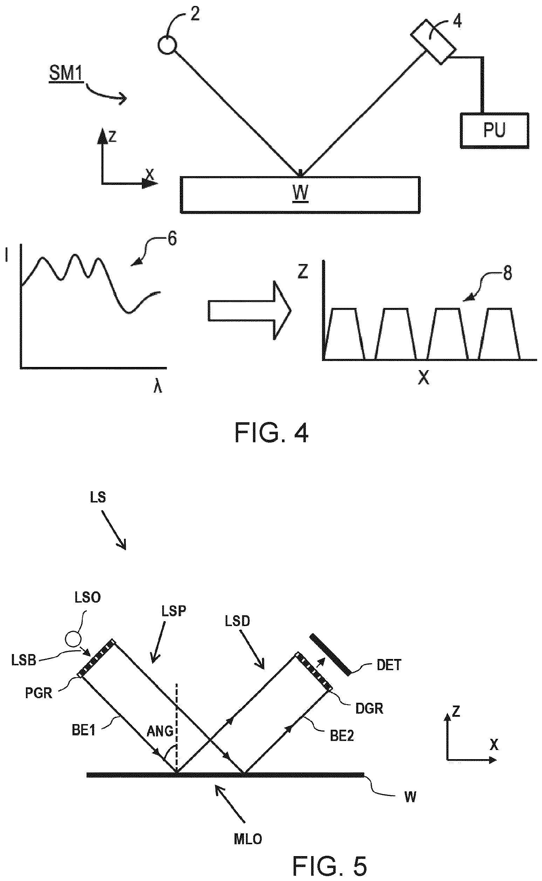

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1st order, -1st order, +2nd order and -2nd order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

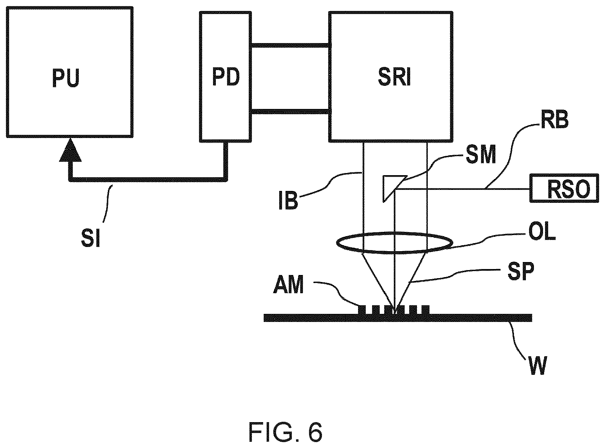

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation, for example making use of non-linear, higher order effects. The input radiation (which may be produced using a laser) may be referred to as pump radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

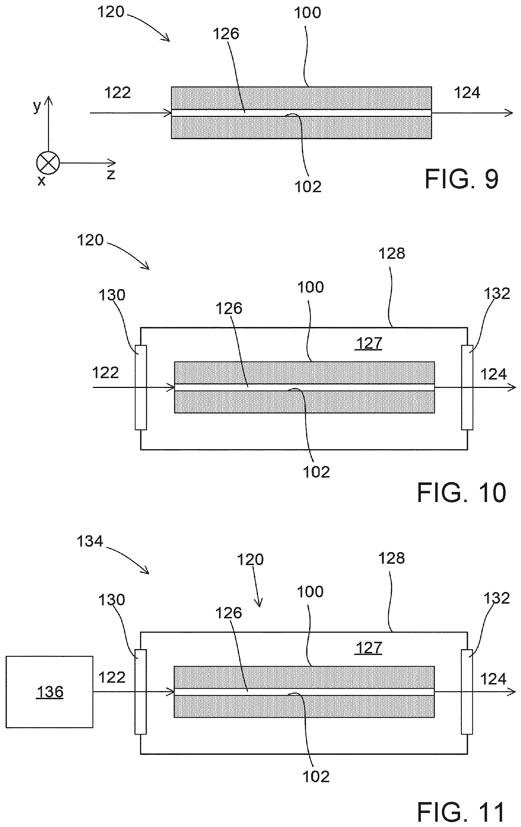

In some implementations, as discussed further below with reference to Figures 9 to 11, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Embodiments of the present invention relate to a new design of optical fiber for use in such a broadband radiation source, and a broadband radiation source comprising the new optical fiber. The new optical fiber is a hollow-core, photonic crystal fiber (HC-PCF). In particular, the new optical fiber is a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art.

It will be appreciated that an anti-resonance element is intended to mean an element which is arranged to confine radiation within the hollow core predominantly by anti-resonance. In particular, the term anti-resonance element is not intended to encompass elements that are arranged to confine radiation within the hollow core by predominantly creating a photonic bandgap in the cladding portion (such as, for example, Kagome photonic crystal fibers). Pure photonic bandgap fibers offer very low loss over a very limited bandwidth. Optical fibers which guide radiation using anti-resonance elements can have a broader transmission window (i.e. having a larger transmission bandwidth) than photonic bandgap fibers. Advantageously, such fibers may therefore be better suited for use in an apparatus for receiving input radiation and broadening a frequency range of the input radiation so as to provide output radiation (for example a supercontinuum source).

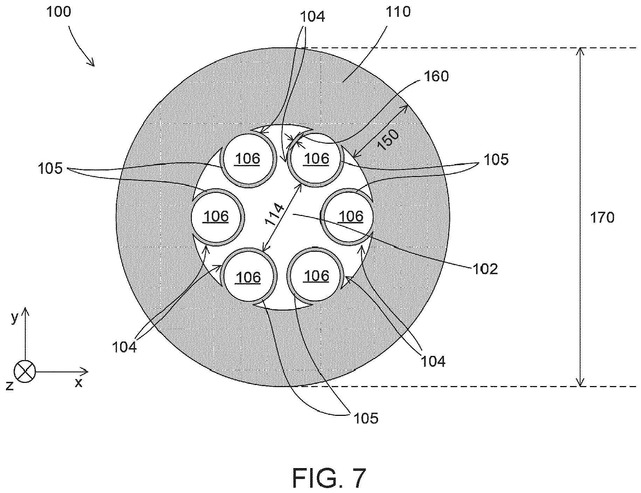

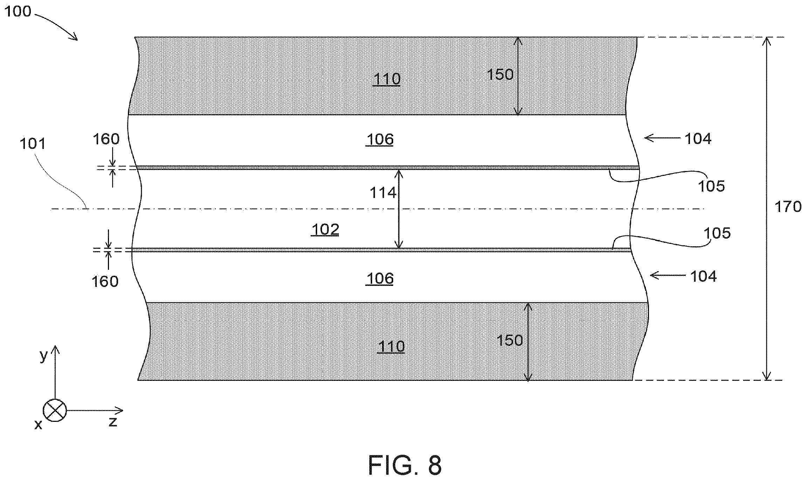

Figures 7 and 8 are schematic cross sectional views of an example of a hollow-core fiber (i.e. a hollow-core optical fiber) 100 in two mutually perpendicular planes (x-y plane and y-z planes, respectively).

The optical fiber 100 comprises an elongate body, which is longer in one dimension compared to the other two dimensions of the fiber 100. This longer dimension may be referred to as an axial direction and may define an axis 101 of the optical fiber 100, also referred to as a longitudinal axis. The two other dimensions define a plane which may be referred to as a transverse plane. Figure 7 shows a cross-section of the optical fiber 100 in the transverse plane (i.e. perpendicular to the axis 101), which is labelled as the x-y plane. Figure 8 shows a cross-section of the optical fiber 100 in a plane containing the axis 101, in particular the x-z plane. The transverse cross-section of the optical fiber 100 may be substantially constant along the fiber axis 101.

It will be appreciated that the optical fiber 100 has some degree of flexibility and therefore the direction of the axis 101 will not, in general, be uniform along the length of the optical fiber 100. The terms such as the optical axis 101, the transverse cross-section and the like will be understood to mean the local optical axis 101, the local transverse cross-section and so on. Furthermore, where components are described as being cylindrical or tubular these terms will be understood to encompass such shapes that may have been distorted as the optical fiber 100 is flexed.

The optical fiber 100 may have any length and it will be appreciated that the length of the optical fiber 100 may be dependent on the application (for example the amount of spectral broadening that is desired in applications within a supercontinuum radiation source). The optical fiber 100 may have a length between 1 cm and 10 m, for example, the optical fiber 100 may have a length between 10 cm and 100 cm.

The optical fiber 100 comprises: a hollow core 102; an inner cladding region surrounding the hollow core 102; and a jacket region 110 surrounding and supporting the inner cladding region. The inner cladding region comprises a plurality of anti-resonance elements for guiding radiation through the hollow core 102. In particular, the plurality of anti-resonance elements are arranged to confine radiation that propagates through the optical fiber 100 predominantly inside the hollow core 102 and to guide the radiation along the optical fiber 100. The hollow core 102 of the optical fiber 100 may be disposed substantially in a central region of the optical fiber 100, so that the axis 101 of the optical fiber 100 may also define an axis of the hollow core 102 of the optical fiber 100.

The inner cladding region comprises a plurality of capillaries 104, for example tubular capillaries, surrounding the hollow core 102. In particular, in the example illustrated in Figures 7 and 8, the inner cladding region comprises a single ring of six tubular capillaries 104.

The capillaries 104 may also be referred to as tubes. The capillaries 104 may be circular in cross section, or may have another shape. Each capillary 104 comprises a generally cylindrical wall portion 105 that at least partially defines the hollow core 102 of the optical fiber 100 and separates the hollow core 102 from a cavity 106. Each of the hollow core-facing capillary wall portions 105 acts as an anti-resonant element for guiding radiation propagating through the optical fiber 100. It will be appreciated that the wall portion 105 may act as an anti-reflecting Fabry-Perot resonator for radiation that propagates through the hollow core 102 (and which may be incident on the wall portion 105 at a grazing incidence angle). A thickness 160 of the wall portion 105 may be suitable so as to ensure that reflection back into the hollow core 102 is generally enhanced whereas transmission into the cavity 106 is generally suppressed. In some embodiments, the capillary wall portion 105 may have a thickness 160 smaller than 400 nm; smaller than 300 nm; or smaller than 150 nm.

It will be appreciated that, as used herein, the term inner cladding region is intended to mean a region of the optical fiber 100 for guiding radiation propagating through the optical fiber 100 (i.e. the capillaries 104 which confine said radiation within the hollow core 102). The radiation may be confined in the form of transverse modes, propagating along the fiber axis 101.

The jacket region 110 is generally tubular and supports the capillaries 104 of the inner cladding region. The capillaries 104 are distributed evenly around an inner surface of the jacket region 110. The six capillaries 104 may be described as surrounding the hollow core 102 in a symmetrical arrangement. In embodiments comprising six capillaries 104, the capillaries 104 may be described as being disposed in a generally hexagonal formation.

The capillaries 104 are arranged so that each capillary is not in contact with any of the other capillaries 104. Each of the capillaries 104 is in contact with the jacket region 110 and spaced apart from adjacent capillaries 104 in a ring structure. Such an arrangement may be beneficial since it may increase a transmission bandwidth of the optical fiber 100 (relative, for example, to an arrangement wherein the capillaries are in contact with each other). Alternatively, in some embodiments, each of the capillaries 104 may be in contact adjacent capillaries 104 in the ring structure.

The six capillaries 104 of the inner cladding region are disposed in a ring structure around the hollow core 102. An inner surface of the ring structure of capillaries 104 at least partially defines the hollow core 102 of the optical fiber 100. In some embodiments, a diameter of the hollow core 102 (which may be defined as the smallest dimension between opposed capillaries, indicated by arrow 114) may be between 5 µm and 100 µm. In some embodiments, the diameter 114 of the hollow core 102 may be between 5 µm and 50 µm. In some embodiments, the diameter 114 of the hollow core 102 may be between 30 µm and 40 µm. The diameter 114 of the hollow core 102 may affect the mode field parameter, impact loss, dispersion, modal plurality, and non-linearity properties of the hollow core optical fiber 100.

In the embodiment illustrated in Figures 7 and 8, the inner cladding region comprises a single ring arrangement of capillaries 104 (the hollow core-facing wall portions 105 which act as anti-resonance elements). Therefore, a line in any radial direction from a center of the hollow core 102 to an exterior of the optical fiber 100 passes through no more than one capillary 104.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figures 7 and 8 comprises a ring of six capillaries 104 with wall portions 105, in other embodiments, one or more rings comprising any number of anti-resonance elements (for example 4, 5, 6, 7, 8, 9, 10, 11 or 12 capillaries) may be provided in the inner cladding region.

In the embodiment illustrated in Figures 7 and 8, the inner cladding region comprises a circular cross-section. However, it will be appreciated that other embodiments may be provided with inner cladding regions having cross-sections of shapes other than circular. For example, in an embodiment of the present invention, the inner cladding region may have a hexagonal cross-section. A hexagonal cross-section may advantageously facilitate easier placement of the capillaries 104 in a symmetrical arrangement. For example, six capillaries 104 may be each placed at a vertex of the hexagonal cross-section, providing an arrangement of capillaries 104 having hexagonal symmetry.

The optical fiber 100 may be referred to as a hollow-core, photonic crystal fiber (HC-PCF). Typically, such a hollow-core, photonic crystal fiber comprises an inner cladding region (which may for example comprise anti-resonance elements) for guiding radiation within the fiber, and a jacket region. The jacket region is typically a jacket or tube of material which supports the inner cladding region.

Figure 9 shows schematically a general set up for an apparatus 120 for receiving input radiation 122 and broadening a frequency range of the input radiation 122 so as to provide broadband output radiation 124. The apparatus 120 comprises the optical fiber 100 with a hollow core 102 for guiding radiation propagating through the optical fiber 100. It will be appreciated that in order to aid the clarity of the Figure only the hollow core 102 of the optical fiber 100 is shown in Figure 9 (and the cladding and support portions are not distinguished). The apparatus 120 further comprises a gas 126 disposed within the hollow core 102, wherein the gas comprises a working component which enables the broadening of the frequency range of the received input radiation 126 so as to provide broadband output radiation 124.

The working component of the gas 126 may be a noble gas. The working component may comprise one or more of Argon, Krypton, Neon, Helium and Xenon. Alternatively or additionally to the noble gas, the working component may comprise a molecular gas (e.g. H₂, N₂, O₂, CH₄, SF₆).

In one implementation, the gas 126 may be disposed within the hollow core 102 at least during receipt of input radiation 122 for producing broadband output radiation 124. It will be appreciated that, while the apparatus 120 is not receiving input radiation 122 for producing broadband output radiation, the gas 126 may be wholly or partially absent from the hollow core 102. In general, the apparatus 120 comprises an apparatus for providing the gas 126 within the hollow core 102 of the optical fiber 100. Such apparatus for providing the gas 126 within the hollow core 102 of the optical fiber 100 may comprise a reservoir, as now discussed with reference to Figure 10.

Figure 10 shows the apparatus 120 as shown in Figure 9 further comprising an enclosure 128. The optical fiber 100 is disposed inside the enclosure 128. The enclosure 128 may also be referred to as a reservoir, housing, or container. The enclosure 128 comprises a heat transport region 127. The heat transport region 127 may comprise a gas, for example the same gas 126 as within the hollow core 102 of the optical fiber 100, and/or helium. As described herein, the heat transport region 127 further comprises a second medium comprising a solid and/or a liquid for improved thermal conduction between the optical fiber 100 and the body, or exterior, of the enclosure 128.

The enclosure 128 may comprise one or more features, known in the art, for controlling, regulating, and/or monitoring the composition of any gas inside the enclosure 128. The reservoir may comprise a first transparent window 130. In use, the optical fiber 100 is disposed inside the enclosure 128 such that the first transparent window 130 is located proximate to an input end of the optical fiber 100. The first transparent window 130 may form part of a wall of the enclosure 128. The first transparent window 130 may be transparent for at least the received input radiation frequencies, so that received input radiation 122 (or at least a large portion thereof) may be coupled into the optical fiber 100 located inside enclosure 128. The enclosure 128 may comprise a second transparent window 132, forming part of a wall of the enclosure 128. In use, when the optical fiber 100 is disposed inside the enclosure 128, the second transparent window 132 is located proximate to an output end of the optical fiber 100. The second transparent window 132 may be transparent for at least the frequencies of the broadband output radiation 124 of the apparatus 120.

Alternatively, in another embodiment, the two opposed ends of the optical fiber 100 may be placed inside different enclosures. The optical fiber 100 may comprise a first end section configured to receive input radiation 122, and a second end section for outputting broadband output radiation 124. The first end section may be placed inside a first enclosure, comprising a heat transport region 127. The second end section may be placed inside a second enclosure, wherein the second enclosure may also comprise a heat transport region 127. The functioning of the enclosures may be as described in relation to Figure 10 above. The first enclosure may comprise a first transparent window, configured to be transparent for input radiation 122. The second enclosure may comprise a second transparent window configured to be transparent for broadband output broadband radiation 124. The first and second enclosures may also comprise a sealable opening to permit the optical fiber 100 to be placed partially inside and partially outside the enclosure, so that the gas is sealed inside the enclosure. The optical fiber 100 may further comprise a middle section not contained inside a enclosure. Such an arrangement using two separate enclosures may be particularly convenient for embodiments wherein the optical fiber 100 is relatively long (for example when the length is more than 1 m). It will be appreciated that for such arrangements which use two separate enclosures, the two enclosures (which may comprise one or more features, known in the art, for controlling, regulating, and/or monitoring the composition of any gas inside the two enclosures) may be considered to provide an apparatus for providing the gas 126 within the hollow core 102 of the optical fiber 100.

In this context a window may be transparent for a frequency if at least 50%, 75%, 85%, 90%, 95%, or 99% of incident radiation of that frequency on the window is transmitted through the window.

Both the first 130 and the second 132 transparent windows may form an airtight seal within the walls of the enclosure 128 so that the gas 126, and any gas or liquid of the heat transport region 127 may be contained within the enclosure 128. It will be appreciated that the gas or liquid may be contained within the enclosure 128 at a pressure different to the ambient pressure of the enclosure 128.

In order to achieve frequency broadening high intensity radiation may be desirable. An advantage of having a hollow core optical fibre 100 is that it may achieve high intensity radiation through strong spatial confinement of radiation propagating through the optical fiber 100, achieving high localised radiation intensities. In addition, hollow core designs (for example as compared to solid core designs) can result in higher quality transmission modes (for example, having a greater proportion of single mode transmission). The radiation intensity inside the optical fiber 100 may be high, for example due to high received input radiation intensity and/or due to strong spatial confinement of the radiation inside the optical fiber 100.

An advantage of using a hollow core optical fiber 100 may be that the majority of the radiation guided inside the optical fiber 100 is confined to the hollow core 102. Therefore, the majority of the interaction of the radiation inside the optical fiber 100 is with the gas 126, which is provided inside the hollow core 102 of the optical fiber 100. As a result, the broadening effects of the working component of the gas 126 on the radiation may be increased.

The received input radiation 122 may be electromagnetic radiation. The input radiation 122 may be received as pulsed radiation. For example, the input radiation 122 may comprise ultrafast pulses. The mechanism for the spectral broadening as the radiation interacts with the gas 126 may be for example one or more of four-wave mixing, modulation instability, ionisation of the working gas, Raman effects, Kerr nonlinearity, soliton formation, or soliton fission. In particular, the spectral broadening may be achieved through one or both of soliton formation, or soliton fission.

The input radiation 122 may be coherent radiation. The input radiation 122 may be collimated radiation, and advantage of which may be to facilitate and improve the efficiency of coupling the input radiation 122 into the optical fiber 100. The input radiation 122 may comprise a single frequency, or a narrow range of frequencies. The input radiation 122 may be generated by a laser. Similarly, the output radiation 124 may be collimated and/or may be coherent.

The broadband range of the output radiation 124 may be a continuous range, comprising a continuous range of radiation frequencies. The output radiation 124 may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation 124 may comprise for example electromagnetic radiation over a wavelength range of 100 nm - 4000 nm. The broadband output radiation 124 frequency range may be for example 400 nm - 900 nm, 500 nm - 900 nm, or 200 nm - 2000 nm. The supercontinuum output radiation 124 may comprise white light.

Figure 11 depicts a radiation source 134 for providing broadband output radiation. The radiation source 134 comprises an apparatus 120 as described above with reference to Figure 10. The radiation source 34 further comprises an input radiation source 136 configured to provide input radiation 122 to the apparatus 120. The apparatus 120 may receive input radiation 122 from the input radiation source 136, and broaden it to provide output radiation 124.

The input radiation 122 provided by the input radiation source 136 may be pulsed. The input radiation 122 may comprise electromagnetic radiation of one or more frequencies between 200 nm and 2 µm. The input radiation 122 may for example comprise electromagnetic radiation with a wavelength of 1.03 µm. The repetition rate of the pulsed radiation 122 may be of an order of magnitude of 1 kHz to 100 MHz. The pulse energies may have an order of magnitude of 0.1 µJ to 100 µJ, for example 1 - 10 µJ. A pulse duration for the input radiation 122 may be between 10 fs and 10 ps, for example 300 fs. The average power of input radiation 122 may be between 100 mW to several 100 W. The average power of input radiation 122 may for example be 20 - 50 W.

The broadband output radiation 124 provided by the radiation source 134 may have an average output power of at least 1 W. The average output power may be at least 5 W. The average output power may be at least 10 W. The broadband output radiation 124 may be pulsed broadband output radiation 124. The broadband output radiation 124 may have a power spectral density in the entire wavelength band of the output radiation of at least 0.01 mW/nm. The power spectral density in the entire wavelength band of the broadband output radiation may be at least 3 mW/nm.

The radiation source 134 described above may be provided as part of a metrology arrangement for determining a parameter of interest of a structure on a substrate. The structure on the substrate may for example be a lithographic pattern applied to the substrate. The metrology arrangement may further comprise an illumination sub-system for illuminating the structure on the substrate. The metrology arrangement may further comprise a detection sub-system for detecting a portion of radiation scattered and/or reflected by the structure. The detection sub-system may further determine the parameter of interest on the structure from the portion of radiation scattered and/or reflected by the structure. The parameter may for example be overlay, alignment, or levelling data of the structure on the substrate.

The metrology arrangement described above may form part of a metrology apparatus MT. The metrology arrangement described above may form part of an inspection apparatus. The metrology arrangement described above may be included inside a lithographic apparatus LA.

It will be appreciated that the apparatus 120 and radiation source 134 illustrated in Figures 9-11 are shown in cross-section in the y-z plane.

The nonlinear white light generation process is not without losses, since the intense pump pulses can partially ionize the working component of the gas 126. During the subsequent plasma relaxation process, the power lost is converted to heat, leading to an increase of the temperature inside the fiber 100 and the fiber 100 itself. This heat is transported via the surrounding heat transport medium 127 (typically a gas) to the (typically metal) body of the enclosure 128 where it is dissipated to a cooling circuit. As an example, the power deposited in the system may reach as high as a few watt per meter.

In general, the working component(s) of the gas 126 are sub-optimal thermal conductors, for example with thermal conductivities of approximately 10E-3 W/m K in the case of Argon, and 9E-3 W/m K in the case of Krypton, leading to relatively high peak temperatures inside the fiber. Numerical simulations reveal that, in the case of deposition of a few W/m of energy in the fiber, temperatures of ~ 1000°C can be reached inside a HC-PCF. Without wishing to be bound by theory, such high temperatures may be responsible for damage to the fiber in the form of mechanical deformation of the fiber (e.g. of the capillaries), and/or the depositing of material at the input and/or output ends of the fiber 100.

There is therefore a need to improve the thermal transport (i.e. conductivity of heat, for example by conduction, convection, and/or radiation) from the fiber 100 to the body of the enclosure 128, in order to mitigate the above effects.

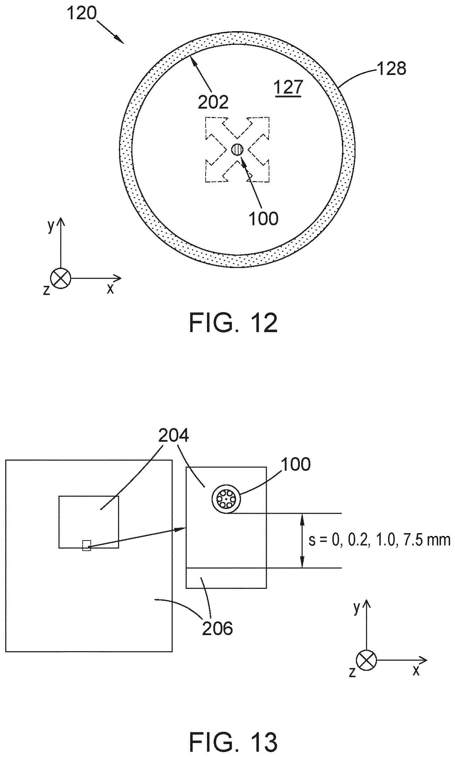

Figure 12 illustrates a cross-section of an apparatus 120 for broadband radiation generation, generally corresponding to the apparatus 120 illustrated in Figures 10 and 11, in the x-y plane (i.e. in a plane perpendicular to the longitudinal axis 101 of the fiber 100. The fiber 100 is shown disposed in an enclosure 128 as described above. While the fiber 100 illustrated in Figure 12 is shown running centrally (i.e. coaxially) through the enclosure 128, it will be appreciated that this is not necessarily the case and that the fiber 100 could equally be positioned off-center.

When the apparatus 120 is in use (i.e. when input radiation is input to the fiber 100 for broadband radiation generation), the fiber 100 heats up as described above. Heat is generally transported radially from the fiber 100 to the body 202 of the enclosure 128, as shown by the dashed arrows in Figure 12, via a heat transport region 127. Ideally, the fiber 100 would be fully surrounded by a solid material with good thermal conductivity, e.g. by soldering the fiber 100 to the inner surface of the body 202 of the enclosure 128. However, different thermal expansion coefficients of the body 202 (generally comprising metal, e.g. steel and/or aluminum) and the fiber 100 (generally comprising fused silica) would cause stress to occur in the fiber 100, ultimately leading to damage and/or a degradation of the performance of the fiber 100.

Instead, heat is transported from the fiber 100 to the body 202 via a heat transport region 127 which has, in prior art systems, typically comprised the same working medium (i.e. gas 126) as that used to generate the broadband radiation. Recently, including helium as a component of the working medium 126 has been demonstrated to increase the thermal conductivity of the working medium 126, as described in WO 2022/008164 A1, the contents of which is hereby incorporated in its entirety by reference. Helium features a thermal conductivity approximately an order of magnitude higher than that of krypton or argon, and may efficiently increase the thermal conductivity of the working medium, or working gas, 126 if mixed in a sufficient ratio, e.g. > 20% helium content. The inclusion of helium in the working medium 126 may lead to an improved fiber lifetime of ~ 3 months, however further improvements to the lifetime of the fiber 100 may be achieved by further reductions to the thermal resistance of the heat transport region 127.

Figure 13 illustrates a numerical simulation of a fiber 100 disposed within a gas medium 204, for example krypton gas, the gas medium 204 being contained by a solid medium 206, specifically stainless steel. The right-hand box of Figure 13 corresponds to a zoomed-in portion of the left-hand box. It will be appreciated that the model is illustrated in the x-y plane (i.e. a plane perpendicular to the longitudinal axis 101 of the fiber 100), and can generally be considered as analogous to the enclosure 128 of the apparatus 120 illustrated in Figures 9-12. The modelled fiber 100 is a HC-PCF having an outer diameter of ~ 180 µm. The modelled portion of the enclosure containing the gas medium 204 has cross section of 15 mm × 18 mm. A distance, s, between the fiber 100 and the solid medium 206 is varied between 0 and 7.5 mm

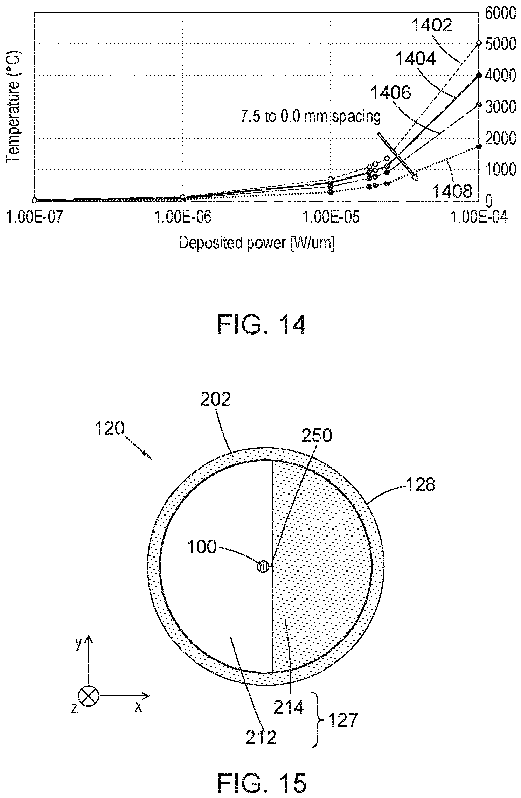

Figure 14 shows the results of the numerical simulation illustrated in Figure 13. That is, Figure 14 shows the calculated peak temperature reached inside the fiber 100 as a function of deposited power inside the fiber core for each of the simulated distances, s. The lines 1402, 1404, 1406, 1408 of the graph in Figure 14 correspond to the simulated distances, s, of 7.5 mm, 1.0 mm, 0.2 mm, and 0 mm, respectively. As shown in Figure 14, a reduction of *s* to 0.2 mm leads to a reduction in fiber temperature by more than 30% compared to the case where the fiber is centered within the gas medium 204. A reduction by more than 50% is achieved if the distance is reduced to zero (i.e. contact).

The coefficient of thermal expansion of stainless steel is about 30 times larger than that of a fused silica fiber. In general, the fiber 100 is held in place within the enclosure 128 by being clamped or otherwise held at opposite ends (i.e. when the apparatus 120 is in a horizontal orientation). As a consequence, the gas cell will expand more than the fiber as the temperature increases, leading to a risk that the fiber would be pulled out of the holders or break. For this reason, the fiber 100 is generally held in an initially bent arrangement when the apparatus 120 is in an "off' or "cold" state, to compensate for the thermal expansion of the enclosure 128 as the apparatus 120 heats up to its operating temperature, after which the fiber may reach a substantially straightened state.

In general, the fiber 100 therefore needs to be allowed to move freely within the enclosure 120 to accommodate the thermal expansion of the enclosure 120 (and/or the fiber 100), and so a non-zero minimum distance between the fiber 100 and the solid medium 206 may be required, at least along some of the length of the fiber 100, to prevent the fiber from becoming trapped against the solid medium 206 and risking damage caused by stress, as described above.

Figure 15 illustrates an example of an apparatus 120 according to the present invention. The apparatus 120 comprises a hollow-core optical fiber 100 disposed within an enclosure 128. It will be appreciated that the apparatus 120 is shown in Figure 15 in cross-section in the x-y plane (i.e. in a plane perpendicular to the longitudinal axis 101 of the fiber 100, with the fiber 100 extending longitudinally into the page in the z direction). A heat transport medium 127 is situated between the fiber 100 and a body 202 of the enclosure 128, the heat transport medium 127 comprising a first medium 212 and a second medium 214. The first medium 212 may comprise a gas, for example comprising the working component of the gas 126 disposed in the core of the fiber 100, and/or a gas comprising helium, for example a gas comprising > 20% helium content.

The second medium 214 may comprise a solid, for example a metal (e.g. steel), a ceramic, and/or glass. The second medium 214 is disposed in at least one radial direction (i.e. radially from the fiber 100) between the fiber 100 and the body 202 of the enclosure 128. In the example illustrated in Figure 15, the second medium 214 fills the enclosure 128 entirely on one side of the fiber 100. The fiber 100 is spatially separated from the second medium 214 by a radial distance 250 (i.e. radially from the fiber). The radial distance 250 is less than or equal to 1 mm over at least a portion of the length of the fiber. In some examples, the radial distance 250 is less than or equal to 200 µm. In some examples, the radial distance 250 is less than or equal to 100 µm. In general, it will be appreciated that the radial distance 250 should be small enough to maximize thermal transport from the fiber 100 to the body 202 of the enclosure 128 via the second medium 214, but large enough to accommodate free movement of the fiber 100 due to thermal expansion. In some examples, the fiber 100 may be in direct contact with the second medium 214 over at least part of the length of the fiber 100.

In the case of a horizontal apparatus 120, where the fiber 100 is held at opposite ends, the fiber 100 must also be free to move in the vertical (i.e. y) direction, e.g. to allow for the movement of the fiber from an initially bent arrangement to a substantially straightened state as the apparatus 120 heats up, as described above. As an example, roughly 1 cm of vertical movement may be required for a 100 K temperature change of the fiber 100. The arrangement of the second medium 214 in Figure 15 accommodates this vertical movement since the fiber is free to move vertically across the entire inner diameter of the enclosure 128 (i.e. within the body 202).

In some examples, one or more of the first medium 212 and the second medium 214 comprises a liquid, for example any of: water, liquid gallium or another liquid metal, liquid nitrogen, carbon disulfide CS₂, carbon tetrachloride, and/or carbon tetrachloride carbon tetrachloride CCl₄.

. Where the first medium 212 comprises a liquid instead of a gas, even further improvements in thermal conductivity between the fiber 100 and the second medium 214 may be achieved due to the generally improved thermal conductivity of a liquid over a gas.

In an example, both the first medium 212 and the second medium 214 comprise liquid. For example, the apparatus 120 may resemble the example illustrated in Figure 12, wherein the heat transport region 127 comprises a liquid completely surrounding the fiber 100.

A liquid heat transport region 127, and/or a liquid first medium 212, advantageously enables free movement of the fiber 100 while also providing direct contact between the fiber 100 and a heat transport medium that has vastly improved thermal conductivity relative to the gases of prior art systems.

It will be appreciated that, in the case of a liquid first medium 212 and/or second medium 214, it would generally be necessary to ensure that the liquid medium is sealed off from the gas forming the working medium 126 for broadband radiation generation. A suitable sealing means should be capable of withstanding the working pressures of the working medium 126, which may be around 10-100 bar.

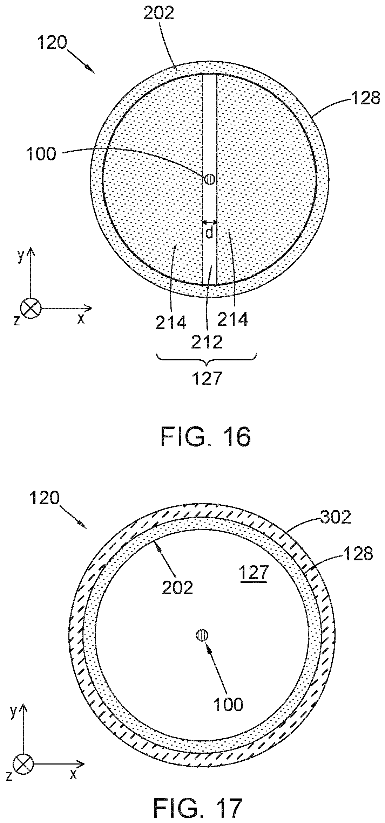

Figure 16 illustrates a further example of an apparatus 120 according to the present invention. In Figure 16, the second medium 214 is arranged on opposite sides of the fiber 100, forming a slit within the body 202 of the enclosure 128, the slit being filled with the first medium 212, and the fiber 100 being located within the slit. The slit configuration of Figure 16 advantageously enables improved heat transport between the fiber 100 and the body 202 of the enclosure 128, since the fiber 100 is surrounded by the second medium 214 in nearly all radial directions, while also enabling free movement of the fiber 100 in the vertical direction. The slit width, *d*, should generally be as narrow as possible to maximize the efficiency of heat transfer between the fiber 100 and the body 202 of the enclosure 128, while also ensuring that the fiber 100 is freely able to move. In an example (e.g. for a fiber 100 having a diameter of ~ 100 µm to 200 µm), *d* may be less than or equal to 2 mm. In a further example, *d*, may be less than or equal to 1 mm

Figure 17 illustrates an example of an apparatus 120 according to the present invention, further comprising a cooling channel 302 external to the body 202 of the enclosure 128. For example, the enclosure 128 may be disposed within a channel 302 configured to cool the body 202 of the enclosure 128 by allowing a fluid such as water, helium (gas or liquid), and/or oil to flow over the body 202 while the apparatus 120 is in use. The cooling channel 302 may be connected to a cooling circuit (e.g. a refrigeration system) to provide cooling of the apparatus, e.g. to carry heat away from the body 202 after it has been transported from the fiber 100 to the body 202 of the enclosure 128 via the heat transport region 127.

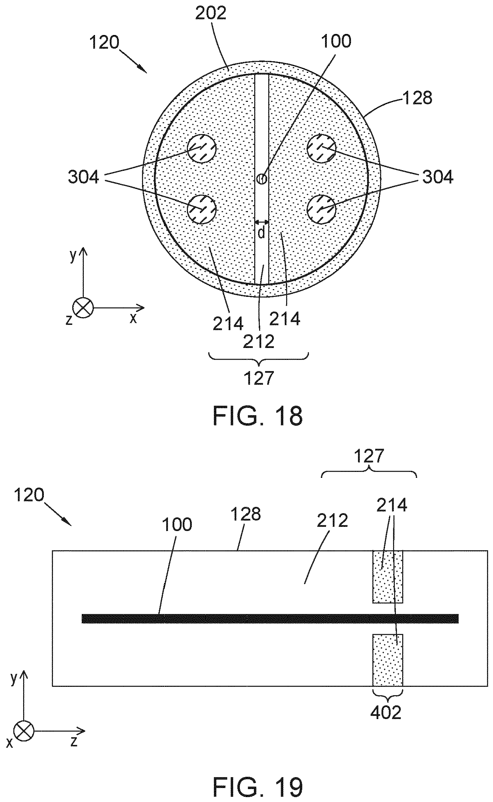

Figure 18 illustrates a further example of an apparatus 120 according to the present invention, the apparatus 120 comprising the second medium 214, wherein the second medium 214 comprises one or more internal cooling channels 304 extending in a direction parallel to the longitudinal axis 101 of the fiber 100 (i.e. in the z direction). The one or more internal cooling channels 304 may comprise bores through a solid second medium 214, and/or may comprise pipes extending through a liquid second medium 214. The internal cooling channels 304 may be configured cool the body 202 of the enclosure 128, and/or the second medium 214, by allowing a fluid such as water helium (gas or liquid), and/or oil to flow through the second medium 214 while the apparatus 120 is in use, alternatively or in addition to a cooling channel 302 of the kind illustrated in Figure 17. The cooling channel(s) 304 may be connected to a cooling circuit (e.g. a refrigeration system) to provide cooling of the apparatus, e.g. to carry heat away from the body 202 after it has been transported from the fiber 100 to the body 202 of the enclosure 128 via the heat transport region 127. The internal cooling channels 304 illustrated in Figure 18 are shown as cylindrical bores, or pipes, through the second medium 214. However, it will be appreciated that the internal cooling channels 304 can have any shape suitable to transport the cooling fluid along the length of the apparatus 120. For example, one or more cooling channels 304 could have a spiral, or corkscrew, configuration extending through the second medium 214 in the z direction.

It will be appreciated that the second medium 214 need not necessarily be present along the entire length of the enclosure 128. In other words, as illustrated in Figure 19, the second medium 214 may only extend over a portion of the length of the enclosure 128 in the z direction. The portion over which the second medium 214 extends in the z direction is illustrated in Figure 19 as a length 402. It will be appreciated that Figure 19 shows an apparatus similar to that illustrated in Figure 18, in a cross-section in the y-z plane. In some examples, the second medium 214 may extend over distance 402 of approximately 1 cm in the z direction. In some examples, the second medium 214 may only extend in the z direction over a portion of the optical fiber 100 where broadband radiation generation takes place, since this is generally the portion of the fiber 100 where the highest operating temperatures are reached. In other words, the distance 402 may cover only the portion of the optical fiber 100 where broadband radiation takes place.

In some cases, the second medium 214 may be present along most or all of the length of the enclosure 128.

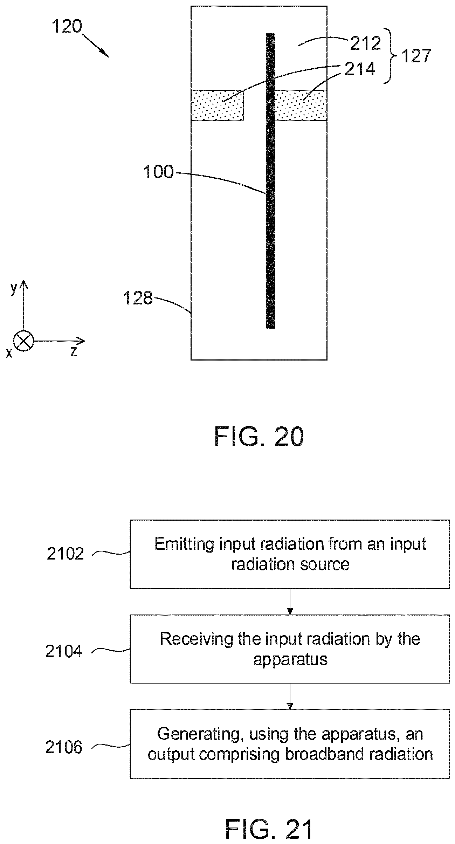

Figure 20 illustrates a further example of an apparatus 120 according to the present invention, shown in-cross section in the y-z plane. It will be appreciated that the apparatus 120 illustrated in Figure 20 is orientated perpendicularly to the examples illustrated in Figures 9-11 and 19. In other words, the apparatus 120 is in a vertical orientation rather than a horizontal orientation (i.e. with respect to the earth), where the length of the fiber 100 runs along the y direction rather than the z direction. In the vertical orientation, the fiber 100 hangs within the enclosure 128 (for example, the fiber 100 may be clamped or held at a top end), such that the orientation of the fiber 100 within the enclosure 128 is dictated by gravity. In such a vertical orientation, the fiber 100 may be surrounded on all sides by a solid second medium 214 (i.e. in all radial directions), and prevented from becoming trapped against the second medium 214 since the fiber 100 will not come to rest against the second medium 214 under gravity as it would in the case of a horizontal orientation. The vertical orientation may therefore facilitate even greater thermal conductivity between the fiber 100 and the body 202 of the enclosure 128 by enabling the surrounding of the fiber 100 on all sides by the second medium 214.

It will be appreciated that, in examples where the apparatus 120 is in a vertical orientation, heat transfer will also occur along the length of the apparatus 120 due to convection.

Figure 21 schematically illustrates a method of generating broadband radiation according to the present invention. In a step 2102 of the method, input radiation is emitted from an input radiation source, for example from an input radiation source 136 of the kind illustrated in Figure 11 and described herein. The input radiation may correspond to the input radiation 122 as illustrated in Figure 11 and described herein. In a step 2104 of the method, the input radiation is received by an apparatus 120 as described herein. In a step 2106 of the method, an output comprising broadband radiation is generated. The output radiation may correspond to the broadband output radiation 124 illustrated in Figure 11 and described herein. The output radiation may be generated according to any of the broadband output radiation generation processes described herein.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. An apparatus for broadband radiation generation, the apparatus comprising a hollow-core fiber at least partially disposed in an enclosure, the enclosure comprising:
a body; and
a heat transport region configured to transport heat from the hollow-core fiber to the body of the enclosure, the heat transport region comprising a first medium disposed between the hollow-core fiber and the body of the enclosure;
wherein, in at least one radial direction from the hollow-core fiber, the heat transport region further comprises a second medium disposed between the first medium and the body of the enclosure over a portion of a length of the enclosure, the second medium comprising a solid and/or a liquid; and
wherein a radial distance between the hollow-core fiber and the second medium is less than or equal to 1 mm over the portion.

2. An apparatus according to claim 1, wherein the hollow-core fiber is free to move within the first medium in at least one direction perpendicular to a longitudinal axis of the hollow-core fiber.

3. An apparatus according to claim 1 or 2, wherein the radial distance between the hollow-core fiber and the second medium is a distance in the at least one radial direction.

4. An apparatus according to any one of the preceding claims, further comprising a cooling channel, the cooling channel being external to the body, said cooling channel being configured to cool the body, in use.

5. An apparatus according to any one of the preceding claims, wherein the second medium forms a slit over the at least a portion of the length of the enclosure, the slit extending in a direction perpendicular to a longitudinal axis of the hollow-core fiber, the slit being wider than a diameter of the hollow-core fiber.

6. An apparatus according to claim 5, wherein a width of the slit is less than or equal to 2 mm, preferably wherein the width of the slit is less than or equal to 1 mm.

7. An apparatus according to any one of the preceding claims, wherein the portion of the length of the enclosure encloses a portion of the hollow-core fiber, said portion of the hollow-core fiber being a portion where broadband radiation generation takes place.

8. An apparatus according to any one of the preceding claims, wherein the portion of the length of the enclosure is at least 1 cm long.

9. An apparatus according to any one of the preceding claims, wherein the hollow-core fiber is configured to hang vertically, in use.

10. An apparatus according to any one of the preceding claims, wherein the second medium further comprises one or more internal cooling channels extending in a direction parallel to a longitudinal axis of the hollow-core fiber.

11. An apparatus according to any one of the preceding claims, wherein the first medium comprises a gas and/or a liquid.

12. An apparatus according to any one of the preceding claims, wherein the second medium comprises a solid, wherein said solid comprises a metal.

13. An apparatus according to any one of the preceding claims, wherein the radial distance between the hollow-core fiber and the second medium, in the at least one radial direction, is 200 µm; preferably wherein said radial distance is 100 µm.

14. An apparatus according to any one of the preceding claims, wherein a distance, in the at least one radial direction, between the second medium and at least a portion of a length of the hollow-core fiber is zero.

15. A method of generating broadband radiation, the method comprising:
emitting input radiation from an input radiation source;
receiving the input radiation by an apparatus according to any one of the preceding claims; and
generating, using the apparatus, an output comprising broadband radiation.
